# EUROPÄISCHE PATENTSCHRIFT

(11) **EP 3 543 586 B1**
(45) Veröffentlichungstag und Bekanntmachung des Hinweises auf die Patenterteilung: **14.10.2020**
(21) Anmeldenummer: 18163179.7
(22) Anmeldetag: 21.03.2018
(51) Int. Cl.: F16L 57/06, B65G 53/52

(54) **HYBRIDROHR MIT ROHRBUND UND VERSCHLEISSRING UND VERFAHREN ZU DESSEN HERSTELLUNG**
HYBRID PIPE WITH PIPE COLLAR AND WEAR RING AND METHOD FOR PRODUCING THE SAME
TUYAU HYBRIDE À FEUILLARD ET BAGUE D'USURE ET SON PROCÉDÉ DE FABRICATION

(43) Veröffentlichungstag der Anmeldung: 25.09.2019
(73) Patentinhaber: Esser -Werke GmbH & Co. KG, 59581 Warstein (DE)
(72) Erfinder: Luig, Rüdiger, 59581 Warstein (DE); Spanke, Peter, 59581 Warstein (DE)
(74) Vertreter: Osterhoff, Utz

(56) Entgegenhaltungen:
- EP-A1- 2 708 480
- EP-A1- 2 784 366
- DE-A1-102010 034 679
- US-A1- 2008 174 110

## Beschreibung

Die vorliegende Erfindung betrifft ein Förderrohr für den Feststofftransport gemäß den Merkmalen im Oberbegriff von Patentanspruch 1 sowie ein Verfahren zu dessen Herstellung gemäß den Merkmalen in Patentanspruch 15.

Aus dem Stand der Technik ist es bekannt, Förderrohre einzusetzen um Feststoffe zu transportieren. Insbesondere werden beispielsweise solche Förderrohre in Betonförderpumpen eingesetzt. Die Förderrohre müssen dabei zum einen druckbeständig ausgebildet sein, um dem Förderdruck standzuhalten. Zum anderen tritt aufgrund der Feststoffpartikel ein entsprechend hoher abrasiver Verschleiß auf.

Aus der gattungsbildenden DE 198 21 637 A1 ist daher ein doppelwandiges Förderrohr für den Feststofftransport bekannt. An einem jeweiligen Ende des Förderrohrs ist ein Rohrbund angesetzt. Im Innenbereich des Rohrbundes ist ein Verschleißring angeordnet.

Ferner ist aus der US 2008/0174110 A1 ein Verfahren zur Herstellung eines doppellagigen Rohres bekannt. Hierzu wird ein Liner mittels eines Gußverfahrens hergestellt. Während des Aushärtens schrumpft der Liner. Im Anschluss daran wird der Liner aus einer Gußform entnommen, nochmals bearbeitet und dann in ein Außenrohr eingezogen,

Aufgabe der vorliegenden Erfindung ist es, ausgehend vom Stand der Technik, ein gattungsbildendes Förderrohr hinsichtlich Produktionskosten, Eigengewicht, Verschleißresistenz und Herstellbarkeit zu optimieren.

Die zuvor genannte Aufgabe wird erfindungsgemäß mit den Merkmalen im Patentanspruch 1 gelöst.

Ein verfahrenstechnischer Teil wird mit den Merkmalen in Patentanspruch 15 gelöst. Vorteilhafte Ausgestaltungsvarianten der vorliegenden Erfindung sind in den abhängigen Ansprüchen beschrieben.

Das Förderrohr für den Feststofftransport ist insbesondere als Betonförderrohr ausgebildet. Es weist einen doppelwandigen Rohrkörper auf, der aus einem Innenrohr und einem Außenrohr sowie mindestens einem endseitig gekoppelten Rohrbund ausgebildet ist. Das Förderrohr zeichnet sich erfindungsgemäß dadurch aus, dass das Innenrohr aus einem Kunststoffwerkstoff ausgebildet ist und in dem Rohrbund ein Verschleißring eingesetzt ist, dessen Innendurchmesser kleiner gleich dem Innendurchmesser des Innenrohres ist und das Innenrohr mit einem Gußverfahren in das Außenrohr eingegossen st. Zunächst wird ein Außenrohr aus einem drucktragenden metallischen Werkstoff ausgebildet. Dies kann beispielsweise ein Stahl der Sorte S235 oder auch S355 sein. Auch kann das Außenrohr aus faserverstärktem Verbundwerkstoff ausgebildet sein, beispielsweise GFK oder CFK.

In das Außenrohr ist nunmehr ein Innenrohr aus einem Kunststoffwerkstoff eingegossen. Beispielsweise kann hierzu ein Polyurethan- oder Polyureakunststoff verwendet werden. Insbesondere sind hier auch Innenrohr und Außenrohr miteinander gekoppelt, bevorzugt durch eine stoffschlüssige Koppelung. Das Innenrohr wird dazu im Schleudergussverfahren in das Außenrohr eingegossen Dies kann ein Rotationsschleuderguss oder auch Formschleuderguss sein. Die endseitig eingesetzten Verschleißringe ermöglichen es beim Gießen, dass kein Werkstoff des Innenrohres aus dem Außenrohr herausläuft.

Der Kunststoffwerkstoff des Innenrohrs ist derart ausgewählt, dass die an der Innenwand des Innenrohres auftretende laminare Strömung einen nur geringen abrasiven Verschleiß an dem Innenrohr hervorruft. Damit im Übergangsbereich zwischen zwei Rohren bzw. einem Rohr und einem Rohrbogen aufgrund turbulenter Strömung der Verschleiß minimiert wird, ist hier ein Verschleißring eingesetzt.

Der Verschleißring selbst kann auch als Kunststoffring ausgebildet sein. Hier wird ein Kunststoffwerkstoff ausgewählt, der eine höhere Resistenz gegen abrasiven Verschleiß aufweist als der Kunststoff des Innenrohrs.

In bevorzugter Ausführungsvariante ist jedoch der Verschleißring aus einem metallischen Werkstoff ausgebildet. Der Verschleißring kann insbesondere auch gehärtet und vergütet ausgebildet sein. Es kann beispielsweise Stahl der Sorte C45 bis C60 ausgewählt werden. Der Verschleißring kann jedoch auch aus einem Gusswerkstoff ausgebildet sein. Beispielsweise kann hier ein Chromcarbid-Werkstoff verwendet werden, beispielsweise GX350. Auch kann der Verschleißring aus einem Keramikwerkstoff ausgebildet sein.

Damit am Rohrende der Verschleißring angesetzt werden kann sowie das Rohr mit weiteren Bauteilen gekoppelt werden kann, ist mindestens an einem Ende ein Rohrbund ausgebildet, bevorzugt ist an jedem Ende des Förderrohres ein Rohrbund ausgebildet. Der Rohrbund selbst ist ebenfalls bevorzugt aus einem metallischen Werkstoff ausgebildet und besonders bevorzugt mit dem Außenrohr gekoppelt oder einstückig aus dem Außenrohr mit hergestellt. Hier kann es sich um ein stoff-, kraft-oder formschlüssiges Koppelungsverfahren handeln oder eine Kombination daraus. Beispielsweise kommen hier Löten, Schweißen, Kleben, Pressen oder Bördeln zum Einsatz. Besonders bevorzugt ist der Rohrbund mit dem Außenrohr verschweißt.

Aufgrund des Innenrohrs aus Kunststoffwerkstoff ist insbesondere beim Löten oder Schweißen ein Wärmeeintrag über das Außenrohr bis auf das Innenrohr zu verzeichnen, welcher sich negativ auf das Kunststoffrohr auswirken könnte. Demnach ist als erfindungsgemäßes Herstellungsverfahren vorgesehen, zunächst das Außenrohr bereitzustellen und mit dem Rohrbund zu koppeln, insbesondere zu schweißen. Danach kann dann das Innenrohr in das Außenrohr eingebracht werden, ohne dass der Kunststoffwerkstoff des Innenrohrs negativ durch das Schweißen beeinflusst wird. Hierzu ist insbesondere vorgesehen, dass ein Innendurchmesser des Rohrbundes größer gleich, insbesondere größer als ein Außendurchmesser des Innenrohres, bzw. Innendurchmesser des Außenrohres ausgebildet ist. Trotz aufgesetztem Rohrbund können somit noch Werkzeuge in das Außenrohr eingeführt werden.

Der Verschleißring selbst kann wiederum in dem Rohrbund gekoppelt werden. Dies kann durch Formschluss, Reibschluss und/oder Stoffschluss erfolgen. Bevorzugt wird der Verschleißring formschlüssig nach dem Prinzip einer Clipverbindung eingesetzt. Hierzu weist der Rohrbund einen radial umlaufend nach innen gerichteten Keilfortsatz auf. Der Verschleißring weist einen dazu radial umlaufend nach außen gerichteten Keilfortsatz auf. Bei Einschieben des Rohrbundes liegen die Schrägflächen der Keilfortsätze aneinander an, bis der jeweilige Keilfortsatz in Axialrichtung überschritten ist, so dass die zwei Keilfortsätze an Rohrbund und Verschleißring formschlüssig hintereinander greifen bzw. einen Hinterschnitt ausbilden.

Der Verschleißring kann optional ergänzend oder alternativ jedoch auch eingeklebt werden oder in sonstiger Weise in den Rohrbund eingebracht werden.

Als alternative Ausgestaltungsvariante ist zur Herstellung des Förderrohres vorgesehen, dass das Außenrohr in Axialrichtung gegenüber dem Innenrohr überstehend ausgebildet ist. Es kann somit der Rohrbund insbesondere mit dem Außenrohr verschweißt werden. Optional ergänzend kann während des Schweißvorganges das Außenrohr gekühlt werden, insbesondere mit einer Innenkühlung. Im Anschluss an den Fügevorgang kann der Verschleißring in den Rohrbund eingesetzt werden. Alternativ kann auch zunächst der Verschleißring mit dem Rohrbund gekoppelt werden. Der mit dem Rohrbund gekoppelte Verschleißring wird dann in das Außenrohr eingesetzt. Der Verschleißring steht in diesem Fall in Axialrichtung über den Rohrbund nach innen in das Förderrohr, mithin in Richtung des Innenrohrs über. Der Verschleißring nimmt somit eine Zentrierung, insbesondere in Radialrichtung vor, so dass der Rohrbund und das Außenrohr miteinander verschweißt werden können.

Damit die turbulente Strömung am Übergang von Verschleißring zu Innenrohr minimiert wird, ist weiterhin vorgesehen, dass der Innendurchmesser des Rohrbundes kleiner gleich dem Innendurchmesser des Innenrohrs ausgebildet ist. Eine in das Innenrohr eintretende Strömung kann insbesondere an einem Übergangsbereich von Verschleißring zu Innenrohr derart in Radialrichtung angehoben werden, dass nicht der Verschleiß am Endbereich des Innenrohrs zunächst stärker ausgebildet ist.

Weiterhin besonders bevorzugt weist der Verschleißring eine axiale Länge zwischen 30 und 200 mm auf. Besonders bevorzugt entspricht die axiale Länge ca. 25 bis 100 % des Innendurchmessers des Rohrbundes selber.

Das erfindungsgemäß bereitgestellte Förderrohr weist aufgrund des Kunststoffinnenrohrs ein besonders geringes Eigengewicht auf. Aufgrund der Verschleißringe im Eingangsbereich ist die Langlebigkeit eines solchen Förderrohres, welches auch als Hybridrohr bezeichnet werden kann, ebenfalls hoch. Die Herstellungskosten sind aufgrund der zuvor beschriebenen Fertigungsverfahren sowie der einzusetzenden Werkstoffe und damit verbundenen Materialkosten gering.

Erfindungsgemäß kann das Feststoffförderrohr auch dergestalt hergestellt werden, dass das Außenrohr endseitig aufgebördelt wird. Das aufgebördelte Ende stellt den Rohrbund dar. In das aufgebördelte Außenrohr wird dann der Verschleißring eingesetzt. Alternativ kann auch nach Einsetzen des Verschleißringes das Innenrohr in das Außenrohr eingebracht werden. Das Innenrohr wird hierbei insbesondere im Schleudergussverfahren in das Außenrohr eingebracht. Der jeweils endseitig eingesetzte Verschleißring verhindert dann während des Schleudergießens ein endseitiges Austreten des flüssigen Werkstoffes zur Herstellung des Innenrohres.

Das Außenrohr kann endseitig einstufig, optional auch zweistufig, mithin mit zwei Stufenabsätzen aufgebördelt sein. Der Verschleißring wird in das Innenrohr eingesetzt. Dies kann durch ein Einpressen erfolgen. Optional kann weiterhin ein Außenring außenseitig auf das Außenrohr aufgebracht sein. Dieser hält insbesondere den Verschleißring dann mit einem Presssitz in dem Außenrohr.

Die vorliegende Erfindung betrifft weiterhin ein Verfahren zur Herstellung des Förderrohres.

Dieses Verfahren zeichnet sich dadurch aus, dass das Innenrohr in das Außenrohr eingegossen wird. Dieses Eingießen findet insbesondere mit einem Schleudergussverfahren statt und dieses wiederum bevorzugt mit einem Rotationsschleuderguss oder einem Formschleuderguss. In Verbindung mit dem Verschleißring kann dieser somit gleichzeitig als eine Art Dichtstopfen dienen. Aufgrund der Zentrifugalkraft beim Schleuderguss wird der Kunststoffwerkstoff zur Ausbildung des Innenrohres an die Innenmantelfläche des Außenrohres gedrückt. Dies erfolgt in Radialrichtung. Zugleich würde jedoch an den axialen Enden des Außenrohres zumindest teilweise Werkstoff zur Herstellung des Innenrohres auslaufen. Dies wird durch den Verschleißring verhindert.

In besonders bevorzugter Ausführungsvariante wird eine chemische und/oder mechanische Reinigung der Innenmantelfläche des Außenrohres durchgeführt, bevor der Kunststoffwerkstoff eingebracht wird. Der Kunststoffwerkstoff wird hierzu insbesondere in einem flüssigen oder breiigen bzw. zähfließendem Zustand eingebracht. Im Anschluss wird das Außenrohr um seine Längsachse rotiert und dadurch radial umlaufend das Innenrohr in dem Außenrohr hergestellt. Insbesondere können somit Wandstärken des Innenrohres zwischen 1 und 20 mm, besonders bevorzugt zwischen 2 und 10 mm und besonders bevorzugt zwischen 3 und 7 mm hergestellt werden. Die Wandstärke des Innenrohres ist jedoch gegenüber eingezogenen oder eingeschobenen Rohren unabhängig von dem Fertigungsverfahren zu sehen. Dies verbessert das Förderrohr im Gegensatz zu eingezogenen oder eingeschobenen Innenrohren.

Durch das Herstellen im Gussverfahren ist gleichzeitig eine stoffschlüssige Verbindung zwischen Außenrohr und Innenrohr hergestellt. Außenrohr und Innenrohr müssen somit nicht separat noch einmal miteinander verklebt werden. An der jeweils inneren radialen Stirnseite eines jeweiligen Verschleißringes wird dieser ebenfalls mit dem Innenrohr vergossen.

In besonders bevorzugter Ausgestaltungsvariante ist das Außenrohr beim Einfüllen sowie beim späteren Rotieren zum Schleudergießen erwärmt. Das Außenrohr kann dabei wärmer sein als der eingebrachte Kunststoffwerkstoff. Insbesondere beim anschließenden Abkühlvorgang wirkt sich dies positiv aus. Eine spätere Schrumpfung des Kunststoffwerkstoffes beginnt somit an der Kontaktfläche zwischen Innenrohr und Außenrohr und nicht an der Innenmantelfläche des hergestellten Kunststoffrohres.

Weitere Vorteile, Merkmale, Eigenschaften und Aspekte der vorliegenden Erfindung sind Gegenstand der nachfolgenden Beschreibung. Bevorzugte Ausgestaltungsvarianten sind in den schematischen Figuren dargestellt. Diese zeigen:
Figur 1 ein Ende eines erfindungsgemäßen Hybridrohrs mit aufgesetztem Rohrbund,
Figur 2 eine alternative Ausgestaltungsvariante gemäß Figur 1 mit über das Innenrohr in Axialrichtung überstehendem Außenrohr,
Figur 3 eine zur Figur 2 alternative Ausgestaltungsvariante bezüglich der Koppelung eines Rohrbundes und
Figur 4 eine alternative Ausgestaltungsvariante mit einem zumindest teilweise einstückig aus dem Außenrohr hergestellten Rohrbund.

In den Figuren werden für gleiche oder ähnliche Bauteile dieselben Bezugszeichen verwendet, auch wenn eine wiederholte Beschreibung aus Vereinfachungsgründen entfällt.

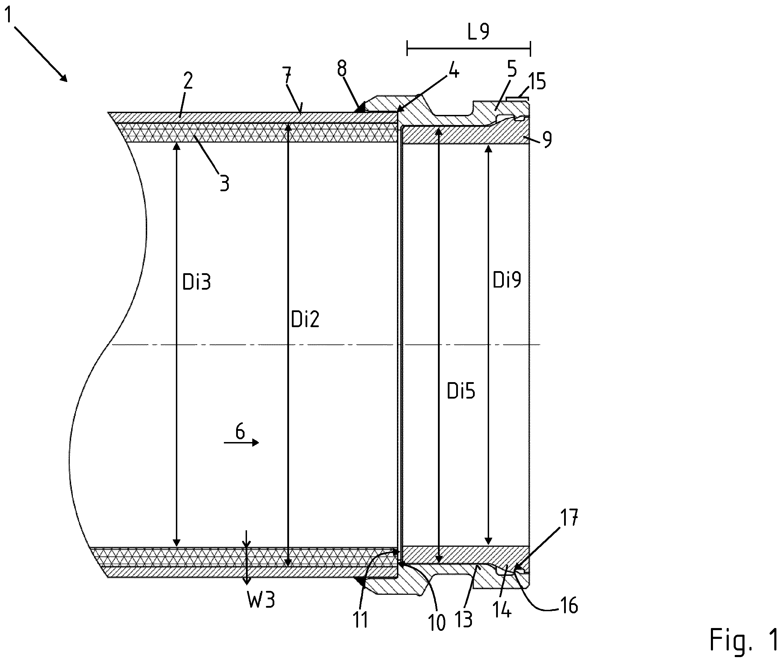

Figur 1 zeigt einen Endabschnitt eines erfindungsgemäßen Förderrohrs 1, ausgebildet als Hybridrohr bzw. Mehrlagenrohr mit einem Außenrohr 2 sowie eine mit dem Außenrohr 2 umfassten Innenrohr 3. Erfindungsgemäß ist das Außenrohr 2 aus einem metallischen Werkstoff ausgebildet und das Innenrohr 3 aus einem Kunststoffwerkstoff. An einem Ende 4 des Förderrohrs 1 ist ein Rohrbund 5 angesetzt. Der Rohrbund 5 umgreift dabei in Axialrichtung 6 beispielsweise die Außenmantelfläche 7 des Außenrohres 2. Ferner ist der Rohrbund 5 über eine umlaufende Fügenaht 8 mit dem Außenrohr 2 stoffschlüssig gekoppelt. Weiterhin ist die Wandstärke W3 des Innenrohres dargestellt.

In dem Rohrbund 5 ist ein Verschleißring 9 eingesetzt. Ein Innendurchmesser Di9 des Verschleißringes 9 ist dabei kleiner gleich einem Innendurchmesser Di3 des Innenrohres 3 ausgebildet. Die stirnseitigen Enden 10 und 11 von Verschleißring 9 und Innenrohr 3 liegen spaltfrei aneinander an.

Weiterhin bevorzugt ist ein Innendurchmesser Di5 des Rohrbundes 5 größer gleich einem Innendurchmesser Di2 des Außenrohres 2 ausgebildet. Der Verschleißring 9 ist bevorzugt ebenfalls in den Rohrbund 5 eingesetzt. Hierzu weist der Verschleißring 9 einen radial umlaufenden sich von einer Außenmantelfläche 13 des Verschleißringes 9 erhebenden Rastkeil 14 auf. Ein im Innendurchmesser vergrößertes Ende 15 des Rohrbundes 5 weist einen radial umlaufenden nach innen gerichteten Keilfortsatz 16 auf. Wird nunmehr der Verschleißring 9 in Axialrichtung 6 in den Rohrbund 5 eingesetzt, so übergleiten sich die Keilfortsätze 16 und es kommt zu einer Hinterschneidung 17, so dass der Verschleißring 9 formschlüssig lagefixiert ist. Der Verschleißring 9 kann alternativ eingeklebt, eingepresst oder eingebördelt werden. Der Verschleißring 9 weist ferner eine axiale Länge L9 auf.

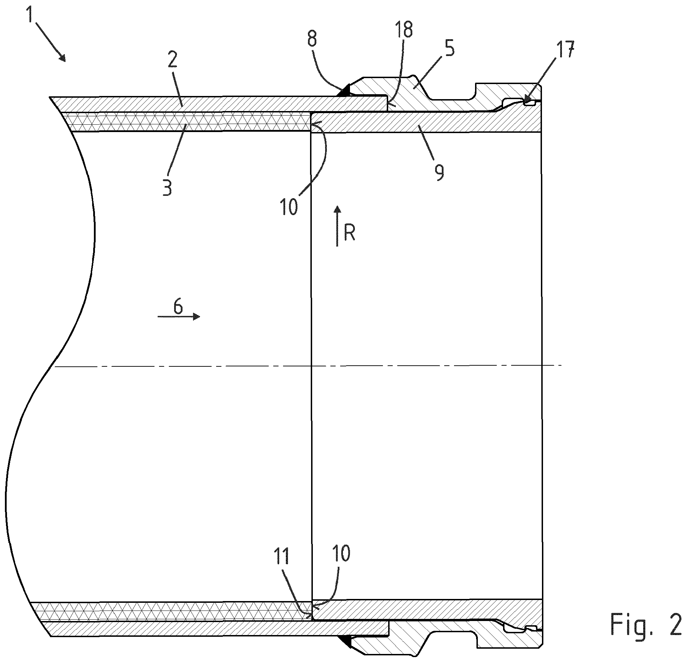

Figur 2 zeigt einen Endabschnitt eines Förderrohrs 1. Im Unterschied zu Figur 1 ist hier das Außenrohr 2 in Axialrichtung 6 über das Innenrohr 3 überstehend ausgebildet. Der Rohrbund 5 ist wiederum das Außenrohr 2 in Axialrichtung 6 zumindest teilweise übergreifend ausgebildet und mit einer Fügenaht 8 mit dem Außenrohr 2 gekoppelt. Damit nunmehr ein entstehender Wärmeeinfluss sich nicht negativ auf das Kunststoff Innenrohr 3 auswirkt, ist auf die Radialrichtung R bezogen unterhalb des Außenrohres 2 im Bereich der Fügenaht 8 nicht das Innenrohr 3 angeordnet, sondern ein Teil des Verschleißringes 9. Entsprechende Wärmeeinwirkung beim Verschweißen ist für den Verschleißring 9 eher unkritisch. Auch kann der Verschleißring 9 erst nach Abschluss der Fügenaht 8 eingesetzt werden. Beispielsweise kann über eine nicht näher dargestellte Innenkühlung während des Schweißvorganges das Außenrohr 2 thermisch gekühlt werden. In dieser Ausgestaltungsvariante liegen ferner die Stirnseite 10 von Innenrohr 3 und die Stirnseite 11 des Verschleißriniges 9 spaltfrei formschlüssig aneinander an. Auch in dieser Ausgestaltungsvariante ist der Verschleißring 9 in den Rohrbund 5 eingeclipst durch eine entsprechende Hinterschneidung 17 zwischen den Keilfortsätzen. Der Verschleißring 9 kann jedoch auch beispielsweise in den Rohrbund 5 eingeklebt sein. Die Fügenaht 8 ist beispielsweise als Kehlnaht ausgebildet.

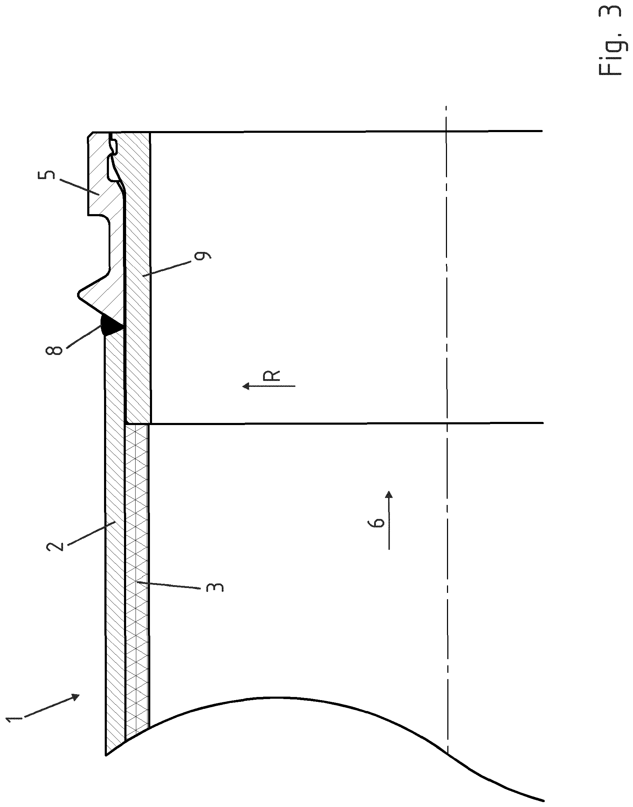

Figur 3 zeigt eine alternative Ausgestaltungsvariante zu Figur 1. Auch hier steht in Axialrichtung 6 das Außenrohr 2 längenabschnittsweise über das Innenrohr 3 über. Der Rohrbund 5 ist hier mit Fügenaht 8 in Form einer Stumpfschweißnaht an das stirnseitige axiale Ende 18 des Außenrohres 2 gekoppelt. Beispielsweise kann dies hergestellt werden, indem der Verschleißring 9 zusammen mit bereits aufgesetztem Rohrbund 5 in das Förderrohr 1 eingesetzt wird. Eine Zentrierung insbesondere in Radialrichtung R von Rohrbund 5 zum Außenrohr 2 wird somit über den Verschleißring 9 bereitgestellt.

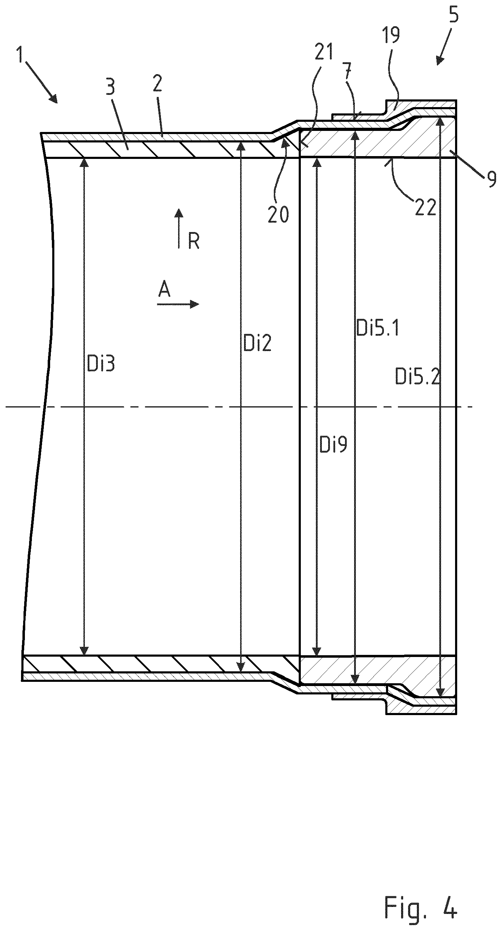

Figur 4 zeigt eine alternative Ausgestaltungsvariante eines Förderrohres 1. Dieses weist ebenfalls ein Außenrohr 2 sowie ein Innenrohr 3 auf. Das Innenrohr 3 ist aus Kunststoffwerkstoff hergestellt. Dabei ist der Rohrbund 5 zumindest teilweise einstückig aus dem Außenrohr 2 hergestellt. Hierbei ist das Außenrohr 2 aufgebördelt. Die Bördelung ist hierbei zweistufig ausgebildet. Gegenüber einem Innendurchmesser Di2 des Außenrohres 2 ist das Außenrohr 2 mit einem Innendurchmesser Di5.1 in einer ersten Stufe aufgebördelt sowie dann endseitig noch einmal mit einem Innendurchmesser Di5.2 in einer zweiten Stufe aufgebördelt, so dass sich jeweils ein größerer Innendurchmesser Di5.1, Di5.2 im Vergleich zu dem Innendurchmesser Di2 des Außenrohres 2 ergibt. In der Aufbördelung ist dann endseitig ein Verschleißring 9 eingesetzt, welcher insbesondere aus metallischem Werkstoff ausgebildet ist. Es kann auch nur eine einstufige Bördelung des Außenrohres 2 erfolgen.

Zur weiteren Stabilisierung sowie Fixierung des Verschleißringes 9 und optional Koppelungsmöglichkeit ist ein Außenring 19 auf die Außenseite bzw. Außenmantelfläche 7 des Außenrohres 2 aufgesetzt. Dieser Außenring 19 bildet dann mit den Flansch 5 aus. Zur Herstellung wird somit erst der Außenring 19 auf das Außenrohr 2 aufgeschoben. Sodann wird die Aufbördelung durchgeführt. Dann wird der Verschleißring 9 endseitig eingesetzt. Daraufhin wird der Außenring 19 in Axialrichtung A wiederum auf das Ende geschoben und insbesondere verpresst oder anderweitig gekoppelt, beispielsweise kann auch ein Verkleben stattfinden. Insbesondere übt somit der Außenring 19 eine in Radialrichtung R nach innen gerichtete Druckkraft aus und fixiert somit aufgrund einer Presspassung insbesondere den Verschleißring 9. Diese Ausgestaltungsvariante bietet optional die Möglichkeit, dass zunächst das Außenrohr 2 mit dem Rohrbund 5 hergestellt wird, wobei hier der Rohrbund 5 aus Aufbördelung, Verschleißring 9 und Außenring 19 besteht. Im Anschluss daran kann das Innenrohr 3 eingebracht werden in Form einer Kunststoffinnenlage. Diese kann beispielsweise im Schleudergussverfahren hergestellt werden. Damit beim Schleuderguss flüssiges Kunststoffmaterial nicht in Axialrichtung A aus dem Rohr herausfließt, ist hier bereits der Verschleißring 9 eingesetzt. Eventuelles Kunststoffmaterial des Innenrohrs 3 füllt somit auch einen Absatz 20 aus, der sich im Übergangsbereich der Aufbördelung ergibt. Das Material des Innenrohrs 3 liegt somit an einer Grenzfläche 21 zwischen Verschleißring 9 und Innenrohr 3 stirnseitig an dem Verschleißring 9 an.

Bei allen zuvor genannten Ausführungsvarianten, insbesondere dieser Ausgestaltungsvariante, ist es vorstellbar, dass eine sehr dünnwandige Kunststoffschicht bzw. Schicht an der Innenmantelfläche 22 des Verschleißringes 9 ausgebildet wird. Diese Schicht kann beispielsweise zum Korrosionsschutz während der Lagerung bzw. Bevorratung eines erfindungsgemäßen Förderrohrs 1 genutzt werden. Bei erstmaliger Inbetriebnahme ist diese Schicht jedoch relativ schnell aufgrund des Abrasivverhaltens des zu fördernden Feststoffes abgenutzt, so dass dann die Innenmantelfläche 22 des Verschleißringes 9 in direktem Kontakt mit dem zu fördernden Feststoff steht. Nach kürzester Zeit der Inbetriebnahme, insbesondere nach wenigen Förderstunden, ist somit der Innendurchmesser Di9 des Verschleißringes 9 kleiner gleich dem Innendurchmesser Di3 des Innenrohrs 3. Fertigungsbedingt (z.B. durch eine Überdosierung) kann Kunststoff über den Innendurchmesser des Verschleißringes laufen und somit ebenfalls eine dünne Schicht bilden.

In einer weiteren bevorzugten Ausgestaltungsvariante kann auch auf den Außenring 19 verzichtet werden, so dass nur der Verschleißring 9 in das aufgebördelte Außenrohr 2 eingesetzt ist.

Zum Einsetzen des Verschleißringes 9 kann beispielsweise eine thermische Ausdehnung erfolgen, gefolgt von einem Einsetzen des Verschleißringes 9, wiederum gefolgt von einem Schrumpfungsvorgang. Der Verschleißring 9 kann jedoch auch in das aufgebördelte Außenrohr 2 eingepresst werden. Optional kann dann der Außenring 19 aufgesetzt werden.

### Bezugszeichen:

- 1 -: Förderrohr
- 2 -: Außenrohr
- 3 -: Innenrohr
- 4 -: Ende zu 1
- 5 -: Rohrbund
- 6 -: Axialrichtung
- 7 -: Außenmantelfläche zu 2
- 8 -: Fügenaht
- 9 -: Verschleißring
- 10 -: stirnseitiges Ende zu 3
- 11 -: stirnseitiges Ende zu 9
- 13 -: Außenmantelfläche zu 9
- 14 -: Rastkeil zu 9
- 15 -: aufgeweitetes Ende zu 5
- 16 -: Keilfortsatz
- 17 -: Hinterschneidung
- 18 -: stirnseitiges Ende zu 2
- 19 -: Außenring
- 20 -: Absatz
- 21 -: Grenzfläche
- 22 -: Innenmantelfläche zu 9

- W3 -: Wandstärke zu 3
- Di2 -: Innendurchmesser zu 2
- Di3 -: Innendurchmesser zu 3
- Di5 -: Innendurchmesser zu 5
- Di5.1 -: Innendurchmesser erste Stufe
- Di5.2 -: Innendurchmesser zweite Stufe
- Di9 -: Innendurchmesser zu 9
- L9 -: axiale Länge zu 9
- R -: Radialrichtung
- A -: Axialrichtung

## Patentansprüche

1. Förderrohr (1) für den Feststofftransport, aufweisend einen doppelwandigen Rohrkörper, bestehend aus einem Innenrohr (3) und einem Außenrohr (2) sowie mindestens einem endseitig angeordneten Rohrbund (5), wobei das Innenrohr (3) aus einem Kunststoffwerkstoff ausgebildet ist und in dem Rohrbund (5) ein Verschleißring (9) eingesetzt ist, dessen Innendurchmesser (Di9) kleiner gleich dem Innendurchmesser (Di3) des Innenrohres (3) ist, **dadurch gekennzeichnet, dass** das Innenrohr (3) mit einem Gußverfahren in das Außenrohr (2) eingegossen ist.

2. Förderrohr (1) nach Anspruch 1, **dadurch gekennzeichnet, dass** das Außenrohr (2) aus einem drucktragenden metallischen Werkstoff oder einem faserverstärkten Verbundwerkstoff ausgebildet ist.

3. Förderrohr (1) nach einem der Ansprüche 1 oder 2, **dadurch gekennzeichnet, dass** das Innenrohr (3) aus einem gegen abrasiven Verschleiß resistentem Kunststoff ausgebildet ist, insbesondere aus Polyurethan oder Polyurea.

4. Förderrohr (1) nach einem der Ansprüche 1 bis 3, **dadurch gekennzeichnet, dass** der Verschleißring (9) aus Kunststoffwerkstoff ausgebildet ist, wobei die Resistenz gegen abrasiven Verschleiß größer ist, gegenüber dem Innenrohr (3).

5. Förderrohr (1) nach einem der Ansprüche 1 bis 3, **dadurch gekennzeichnet, dass** der Verschleißring (9) aus metallischem Werkstoff ausgebildet ist, insbesondere aus einem vergüteten Stahlwerkstoff oder Gusswerkstoff oder dass der Verschleißring (9) aus einem Keramikwerkstoff ausgebildet ist.

6. Förderrohr (1) nach einem der Ansprüche 1 bis 5, **dadurch gekennzeichnet, dass** der Rohrbund (5) und das Außenrohr (2) separat voneinander hergestellte Bauteile sind oder dass der Rohrbund (5) einstückig und werkstoffeinheitlich an dem Außenrohr (2) mit hergestellt ist.

7. Förderrohr (1) nach einem der Ansprüche 1 bis 6, **dadurch gekennzeichnet, dass** der Rohrbund (5) das Außenrohr (2) längenabschnittsweise in Axialrichtung (6) umfasst.

8. Förderrohr (1) nach einem der Ansprüche 1 bis 8, **dadurch gekennzeichnet, dass** der Verschleißring (9) in den Rohrbund (5) eingesetzt ist, dergestalt, dass eine formschlüssige Verbindung zwischen einem radial umlaufenden Rastkeil (14) an der Außenmantelfläche (13) des Verschleißringes (9) und einem radial umlaufenden Rastkeil (14) an der Innenmantelfläche des Rohrbundes (5) ausgebildet ist.

9. Förderrohr (1) nach einem der Ansprüche 1 bis 8, **dadurch gekennzeichnet, dass** ein Innendurchmesser (Di5) des Rohrbundes (5) größer gleich dem Innendurchmesser (Di2) des Außenrohres (3) ausgebildet ist.

10. Förderrohr (1) nach einem der Ansprüche 1 bis 10, **dadurch gekennzeichnet, dass** ein stirnseitiges Ende (18) des Außenrohres (2) über das stirnseitige Ende (10) des Innenrohres (3) in Axialrichtung (6) überstehend ausgebildet ist.

11. Förderrohr (1) nach Anspruch 10, **dadurch gekennzeichnet, dass** der Verschleißring (9) in das Außenrohr (2) eingreifend angeordnet ist, insbesondere ist der Verschleißring (9) in Axialrichtung (A) auf die Rohrrichtung (R) bezogen unterhalb einer Fügenaht (8) des Rohrbundes (5) mit dem Außenrohr (2) angeordnet.

12. Förderrohr (1) nach einem der Ansprüche 10 oder 11, **dadurch gekennzeichnet, dass** der Verschleißring (9) in Axialrichtung (6) länger ausgebildet ist, als der Rohrbund (5), so dass insbesondere der Verschleißring (9) in Axialrichtung (6) in das Außenrohr (2) eingreift, insbesondere formschlüssig eingreift.

13. Förderrohr (1) nach Anspruch 1, **dadurch gekennzeichnet, dass** das Außenrohr (2) endseitig aufgebördelt ist, wobei ein Verschleißring (9) in das Außenrohr (2) eingesetzt ist.

14. Förderrohr (1) nach Anspruch 13, **dadurch gekennzeichnet, dass** ein Außenring (19) endseitig an der Außenseite auf das aufgebördelte Außenrohr (2) aufgesetzt, insbesondere aufgepresst ist und dass der Außenring (19) mit dem Verschleißring (9) als Presspassung aufgesetzt ist.

15. Verfahren zur Herstellung eines Förderrohres (1) mit den Merkmalen von Anspruch 1, **dadurch gekennzeichnet, dass** das Außenrohr (2) mit endseitig eingesetzten Verschleißringen (9) bereitgestellt wird, wobei der Kunststoffwerkstoff in das Außenrohr (2) eingebracht wird und dann das Innenrohr (3) in dem Außenrohr (2) im Schleudergussverfahren hergestellt wird.

## Claims

1. Conveying pipe (1) for the transport of solids, having a double-walled pipe body consisting of an inner pipe (3) and an outer pipe (2) as well as at least one pipe collar (5) arranged at the end side, wherein the inner pipe (3) is formed from a plastic material and in the pipe collar (5) is set a wear ring (9), the inner diameter (Di9) of which is less than or equal to the inner diameter (Di3) of the inner pipe (3), **characterised in that** the inner pipe (3) is poured into the outer pipe (2) in a casting procedure.

2. Conveying pipe (1) according to claim 1, **characterised in that** the outer pipe (2) is formed of a pressure-bearing metallic material or a fibre-reinforced composite material.

3. Conveying pipe (1) according to any of claims 1 or 2, **characterised in that** the inner pipe (3) is formed of a plastic which is resistant to abrasive wear, in particular made of polyurethane or polyurea.

4. Conveying pipe (1) according to any of claims 1 to 3, **characterised in that** the wear ring (9) is formed of plastic material, wherein the resistance to abrasive wear is greater than in the case of the inner pipe (3).

5. Conveying pipe (1) according to any of claims 1 to 3, **characterised in that** the wear ring (9) is formed of metallic material, in particular of a tempered steel material or cast material, or that the wear ring (9) is formed of a ceramic material.

6. Conveying pipe (1) according to any of claims 1 to 5, **characterised in that** the pipe collar (5) and the outer pipe (2) are components manufactured separately from one another or that the pipe collar (5) is integral and manufactured on the outer pipe (2) with material uniformity.

7. Conveying pipe (1) according to any of claims 1 to 6, **characterised in that** the pipe collar (5) encloses the outer pipe (2) in lengthways portions in axial direction (6).

8. Conveying pipe (1) according to any of claims 1 to 8, **characterised in that** the wear ring (9) is set into the pipe collar (5) such that a form-fitting connection is formed between a radially encircling locking wedge (14) on the outer shell surface (13) of the wear ring (9) and a radially encircling locking wedge (14) on the inner shell surface of the pipe collar (5).

9. Conveying pipe (1) according to any of claims 1 to 8, **characterised in that** the inner diameter (Di5) of the pipe collar (5) is formed greater than or equal to the inner diameter (Di2) of the outer pipe (3).

10. Conveying pipe (1) according to any of claims 1 to 10, **characterised in that** a face-side end (18) of the outer pipe (2) is formed protruding beyond the base-side end (10) of the inner pipe (3) in axial direction (6).

11. Conveying pipe (1) according to claim 10, **characterised in that** the wear ring (9) is arranged engaging in the outer pipe (2), in particular the wear ring (9) is in axial direction (A), relating to the pipe direction (R), arranged below a joint seam (8) of the pipe collar (5) with the outer pipe (2).

12. Conveying pipe (1) according to any of claims 10 or 11, **characterised in that** the wear ring (9) is formed longer in axial direction (6) than the pipe collar (5), such that in particular the wear ring (9) engages in axial direction (6) in the outer pipe (2), particularly engages in a form-fitting manner.

13. Conveying pipe (1) according to claim 1, **characterised in that** the outer pipe (2) is flanged at the ends, wherein a wear ring (9) is set into the outer pipe (2).

14. Conveying pipe (1) according to claim 13, **characterised in that** an outer ring (19) is set onto the end of the outer side of the flanged outer pipe (2), in particular is pressed on, and that the outer ring (19) is set on with the wear ring (9) as an interference fit.

15. Method for manufacturing a conveying pipe (1) having the characteristics of claim 1, **characterised in that** the outer pipe (2) is provided with wear rings (9) set on the ends, wherein the plastic material is introduced into the outer pipe (2) and then the inner pipe (3) is manufactured in the outer pipe (2) in a centrifugal casting method.

## Revendications

1. Tube de transport (1) pour le transport de matière solide, présentant un corps de tube à double paroi, consistant en un tube intérieur (3) et un tube extérieur (2) ainsi qu'au moins un collet tubulaire (5) disposé à l'extrémité, selon lequel le tube intérieur (3) est formé d'une matière plastique et une bague d'usure (9) est mise en oeuvre dans le collet tubulaire (5), dont le diamètre intérieur (Di9) est inférieur ou égal au diamètre intérieur (Di3) du tube intérieur (3), **caractérisé en ce que** le tube intérieur (3) est coulé dans le tube extérieur (2) avec un procédé de coulée.

2. Tube de transport (1) selon la revendication 1, **caractérisé en ce que** le tube extérieur (2) est formé d'un matériau métallique supportant la pression ou d'un matériau composite renforcé par fibres.

3. Tube de transport (1) selon l'une des revendications 1 ou 2, **caractérisé en ce que** le tube intérieur (3) est formé d'un plastique résistant à une usure abrasive, en particulier du polyuréthane ou du polyurea.

4. Tube de transport (1) selon l'une des revendications 1 à 3, **caractérisé en ce que** la bague d'usure (9) est formée d'une matière plastique, selon lequel la résistance à une usure abrasive est plus grande, par comparaison avec le tube intérieur (3).

5. Tube de transport (1) selon l'une des revendications 1 à 3, **caractérisé en ce que** la bague d'usure (9) est formée d'un matériau métallique, en particulier d'un matériau en acier trempé ou d'un matériau de moulage ou **en ce que** la bague d'usure (9) est formée d'un matériau céramique.

6. Tube de transport (1) selon l'une des revendications 1 à 5, **caractérisé en ce que** le collet tubulaire (5) et le tube extérieur (2) sont des composants fabriqués séparément l'un de l'autre ou **en ce que** le collet tubulaire (5) est fabriqué d'un seul tenant avec le tube extérieur (2) et dans le même matériau.

7. Tube de transport (1) selon l'une des revendications 1 à 6, **caractérisé en ce que** le collet tubulaire (5) comprend le tube extérieur (2) par sections longitudinales dans la direction axiale (6).

8. Tube de transport (1) selon l'une des revendications 1 à 8, **caractérisé en ce que** la bague d'usure (9) est mise en oeuvre dans le collet tubulaire (5) de façon que soit formé un raccord à engagement positif entre un coin d'encliquetage périphérique radial (14) sur la surface d'enveloppe extérieure (13) de la bague d'usure (9) et un coin d'encliquetage périphérique radial (14) sur la surface d'enveloppe intérieure du collet tubulaire (5).

9. Tube de transport (1) selon l'une des revendications 1 à 8, **caractérisé en ce qu'**un diamètre intérieur (Di5) du collet tubulaire (5) est formé plus grand ou égal au diamètre intérieur (Di2) du tube extérieur (3).

10. Tube de transport (1) selon l'une des revendications 1 à 10, **caractérisé en ce qu'**une extrémité frontale (18) du tube extérieur (2) est formée en saillie au-dessus de l'extrémité frontale (10) du tube intérieur (3) dans la direction axiale (6).

11. Tube de transport (1) selon la revendications 10, **caractérisé en ce que** la bague d'usure (9) est disposée par accrochage dans le tube extérieur (2), en particulier la bague d'usure (9) est disposée dans la direction axiale (A) relativement à la direction de tube (R) au-dessous d'un joint d'assemblage (8) du collet tubulaire (5) avec le tube extérieur (2).

12. Tube de transport (1) selon l'une des revendications 10 ou 11, **caractérisé en ce que** la bague d'usure (9), dans la direction axiale (6), est formée plus longue que le collet tubulaire (5), de façon, en particulier, que la bague d'usure (9), dans la direction axiale (6), s'accroche dans le tube extérieur (2), en particulier s'accroche selon un engagement positif.

13. Tube de transport (1) selon la revendication 1, **caractérisé en ce que** le tube extérieur (2) est serti à l'extrémité, selon lequel une bague d'usure (9) est mise en œuvre dans le tube extérieur (2).

14. Tube de transport (1) selon la revendication 13, **caractérisé en ce qu'**une bague extérieure (19) est disposée sur le tube extérieur serti (2), du côté extérieur, à l'extrémité, en particulier est engagée par pression et **en ce que** la bague extérieure (19) est disposée sous la forme d'un ajustage serré avec la bague d'usure (9).

15. Procédé de fabrication d'un tube de transport (1) avec les caractéristiques de la revendication 1, **caractérisé en ce que** le tube extérieur (2) est préparé avec des bagues d'usure (9) mises en œuvre à l'extrémité, selon lequel la matière plastique est introduite dans le tube extérieur (2) et ensuite le tube intérieur (3) est fabriqué dans le tube extérieur (2) avec un procédé de moulage par coulée centrifuge.
